# EUROPÄISCHE PATENTSCHRIFT

(11) **EP 1 201 495 B1**
(45) Veröffentlichungstag und Bekanntmachung des Hinweises auf die Patenterteilung: **10.12.2003**
(21) Anmeldenummer: 01125318.4
(22) Anmeldetag: 26.10.2001
(51) Int. Cl.: B60P 1/44

(54) **System zum Be- und Entladen von Fahrzeugen**
System for loading and unloading of transport vehicles
Système pour le chargement et le déchargement de véhicules

(30) Priorität: 30.10.2000 DE 10053759
(43) Veröffentlichungstag der Anmeldung: 02.05.2002
(73) Patentinhaber: Urbach, Dieter, Dr., 91344 Waischenfeld (DE)
(72) Erfinder: Urbach, Dieter, Dr., 91344 Waischenfeld (DE)
(74) Vertreter: Schmitz, Hans-Werner, Dipl.-Ing.

(56) Entgegenhaltungen:
- DE-A- 10 043 398
- DE-U- 20 018 547
- US-A- 2 930 499
- US-A- 3 727 778
- US-A- 5 674 043

## Beschreibung

Die Erfindung betrifft ein System zum Be- und Entladen von Fahrzeugen nach dem Oberbegriff von Anspruch 1.

Vorrichtungen zur Erleichterung von Be- und Entladevorgängen, vor allem bei Kombi-Fahrzeugen, Geländewagen, Vans und kleinen Lieferfahrzeugen bestehen überwiegend aus liniear ausziehbaren Trägereinrichtungen, wobei zwischen zwei parallel verlaufenden, teleskopierbaren Trägerschienen Ladeplatten oder Tragholme als Aufnahmeeinrichtungen für das Ladegut vorgesehen sind. Solchen Einrichtungen fehlt fast immer eine Hubvorrichtung mit der das Ladegut von der Fahrebene aufgenommen werden kann.

Für leichte Nutzfahrzeuge sind auch Hubvorrichtungen bekannt, die, schwenkbar im Randbereich von Ladeflächen fest angeordnet ein Ladegut von außerhalb eines Fahrzeugs aufnehmen, über die Ladefläche einschwenken und dort absetzen. Mit derartigen Vorrichtungen kann das Ladegut auf der Ladefläche nicht weitertransportiert und/oder gestapelt werden.

Aufgabe der Erfindung ist es, eine wirtschaftlich herstellbare und einfach im Fahrzeug anzubringende Vorrichtung zu schaffen, die bei geringem Platzbedarf ein Ladegut von drei Seiten außerhalb des Fahrzeugs aufnehmen und innerhalb des Fahrzeugladeraums ohne weitere Umsetzvorgänge an jedem beiliebigen Platz absetzen kann.

Diese Aufgabe wird erfindungsgemäß durch die kennzeichnenden Merkmale des Anspruchs 1 gelöst.

Das modular aufgebaute, vorzugsweise in Leichtbautechnik ausgeführte System wird aus mindestens einer Trägereinrichtung gebildet. Deren Grundbausteine sind wenigstens ein scherenartig verbundenes vertikal schwenkbares Strebenpaar, zwei Führungsstangen und vier Führungselemente mit Lasche. Auf den Führungsstangen mit rundem Querschnitt sind übereinander je zwei Führungselemente, vorteilhaft bestehend aus Aluminiumrohrstücken mit eingepressten Kunststoff-Gleithülsen oder Stahl-Kugelbuchsen, nahezu spielfrei, drehund schiebebeweglich angeordnet.

Die Führungselemente sind mit Laschen ausgestattet, an denen je ein Ende der sich kreuzenden Scherenstreben vertikal schwenkbar angelenkt ist. Verschiedene Ausführungen von Scherenmechanismen sind bekannt, so dass ausführliche Beschreibungen dazu entfallen können.

Auf den Führungsstangen sind die unteren Führungselemente vorzugsweise nur radial drehbeweglich, die oberen Führungselemente radial drehbeweglich und axial schiebebeweglich angeordnet. Eine erste Führungsstange wird vertikal aufstehend zwischen Fahrzeugladeboden und Fahrzeugdach mittels dort befestigter Sockel fixiert oder an Schienen rollbeweglich geführt. Die zweite, etwas kürzere Führungsstange wird vorzugsweise mittels einer Lenkrolle gegen den Fahrzeugladeboden abgestützt. Für Fahrzeuge, deren Dachkonstruktion zur Anbringung von Sockeln oder Schienen nicht geeignet ist, kann die erste Führungsstange auch nur in einen, auf dem Fahrzeugboden verschraubten Sockel gesteckt und eingeklemmt werden. Besonders vorteilhaft für große Fahrzeuge ist es, wenn in den Fahrzeugladeboden an verschiedenen Stellen, z.B. leicht konische Steckhütsen bündig eingelassen werden, in die dann, je nach Bedarf, die kompatibel dazu ausgebildete erste Führungsstange einer Trägereinheit eingesteckt werden kann.

Ähnlich den Führungselementen sind die auf der zweiten Führungsstange höhenfixiert anzuordnenden Aufnahmeeinrichtungen ausgebildet, an denen die aufzunehmenden Gegenstände, wie z.B. Behälter, Ladeplatten oder Hubeinrichtungen festgemacht werden können, die durch diese Merkmale um fast 360° horizontal um die zweite Führungsstange schwenkbar sind.

Aktionsradius und Handhabungsfreundlichkeit des Systems können nochmals dadurch verbessert werden, dass die aufzunehmenden Gegenstände nicht direkt mit der Aufnahmeeinrichtung gekoppelt werden, sondern mittels eines an der Aufnahmeeinrichtung kraftschlüssig angeordneten, seitlich abstehenden Tragarms, dessen freies Ende wiederum zur horizontal schwenkbeweglichen Koppelung der aufzunehmenden Gegenstände ausgebildet ist:

Die Trägereinrichtung ist durch Aneinanderreihen von mehreren Scherenstrebenpaaren verlängerbar. Durch mehrere nebeneinander im Fahrzeug angeordnete und endseitig mittels Traversen verbundener Trägereinrichtungen läßt sich die Tragfähigkeit des Systems erheblich steigern. Allerdings wird durch eine derartige Anordnung die Verschwenkbarkeit der Trägereinrichtung und damit auch ihre Einsatzmöglichkeiten eingeschränkt. Ebenso ist vorsehbar, dass an einer Trägereinrichtung statt einer Aufnahmeeinrichtung eine weitere Trägereinrichtung mit anschließend angeordneter Aufnahmeeinrichtung gebildet wird. Die Möglichkeiten der Aus- und Umgestaltung erfindungsgemäßer Trägereinrichtungen und deren Anordnung in oder an Fahrzeugen sind so vielgestaltig und für den Fachmann so leicht nachvollziehbar, dass eine weitere Beschreibung dazu nicht erforderlich ist.

Mit schematisierten Figuren wird an Ausführungsbeispielen die Erfindung in ihren Grundzügen noch näher erläutert.

Es zeigt:
Fig.1: eine im Fahrzeug angeordnete Trägereinrichtung in einer Seitenansicht.
Fig.2: die in Fig.1 dargestellte Trägereinrichtung in einer Draufsicht.
Fig.3: eine aus vier Strebenpaaren gebildete Trägereinrichtung in einer Seitenansicht.
Fig.4: zwei nebeneinander angeordnete, ausgezogene und traversal verbundene Trägereinrichtungen in einer Draüfsicht.
Fig.5: die in Fig.4 dargestellte Anordnung im eingeschobenen Zustand, und
Fig.6: eine perspektivische Darstellung einer Einbaumöglichkeit des erfindungsgemäßen Systems in ein Nutzfahrzeug mit Kofferaufbau.

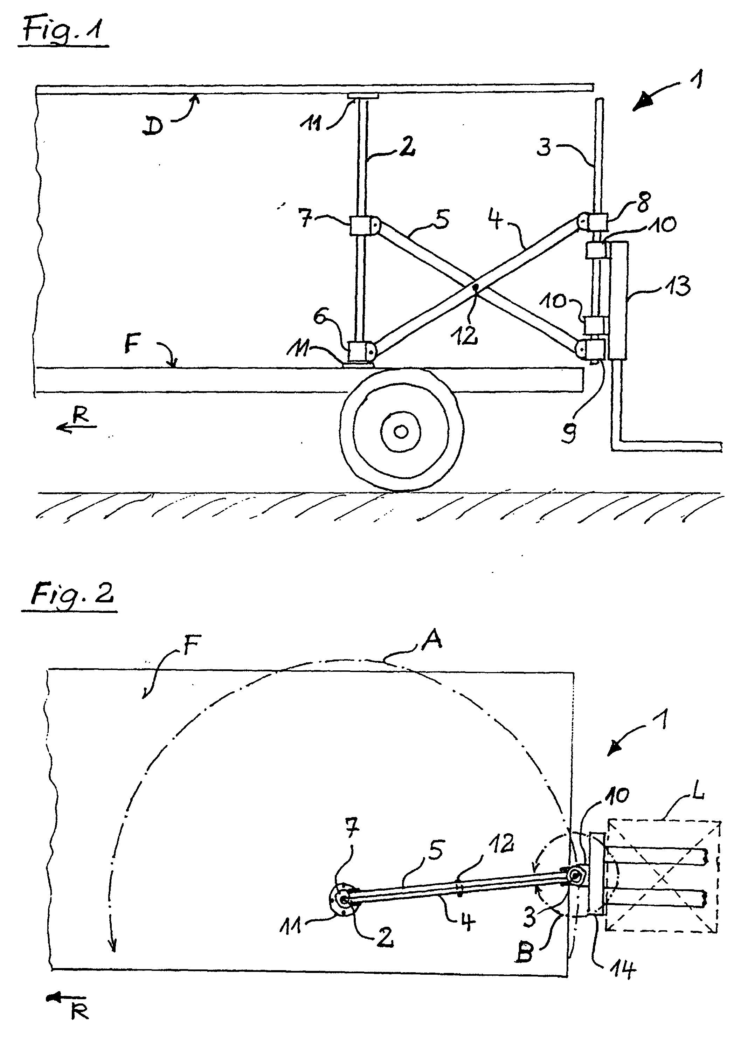

In Fig.1 wird eine aus dem System gebildete Trägereinrichtung 1 vorgestellt, deren Führungsstange 2 vertikal zwischen Fahrzeugladeboden F und Fahrzeugdach D aufgestellt und dort an Sockeln 11 fixiert ist. Auf der Führungsstange 2 sind zwei Führungselemente 6, 7 horizontal drehbar und vertikal verschieblich angeordnet, an denen je eine Scherenstrebe 4 bzw. 5 vertikal schwenkbeweglich angeflanscht ist. Die Scherenstreben 4, 5 kreuzen sich mittig und sind dort mittels eines Lagerzapfens 12 vertikal schwenkbeweglich verbunden. Am anderen Ende der Scherenstreben 4, 5 sind die Führungselemente 8, 9 angeflanscht, in denen die Führungsstange 3 gehalten wird, die kürzer ist als die Führungsstange 2. Im unteren Führungselement 9 ist die Führungsstange 3 durch hier nicht gezeigte Sprengringe so gelagert und gesichert, dass ihre untere Stimfläche beabstandet über dem Fahrzeugladeboden gehalten wird und-aus dem Führungselement 9 nicht ausziehbar ist, sich aber um ihre Längsachse drehen kann. In dieser Anordnung ist die Führungsstange 3 mit stufenlos variablen Abständen parallel um die Führungsstange 2 schwenkbar. An der Führungsstange 3 sind höhenfixiert drehbewegliche Aufnahmeeinrichtungen 10, ähnlich den Führungselementen 8, zur Aufnahme einer Hubeinrichtung 13 angebracht, die in Einzelheiten jedoch nicht Gegenstand der Erfindung ist.

Fig.2 verdeutlicht durch die Strichpunktlinien A, B mögliche Aktionsradien der in Fig.1 gezeigten Trägereinrichtung 1 in der Draufsicht. Die Führungsstange 2 ist außermittig auf dem Fahrzeugladeboden F so angeordnet, dass mit der hier nur symbolisch angedeuteten, horizontal schwenkbeweglichen Hubeinrichtung 14 das darauf befindliche Ladegut L sowohl hinter als auch neben dem Fahrzeug aufnehmbar und an nahezu jedem Platz der Fahrzeugladefläche F absetzbar oder stapelbar ist bzw. umgekehrt.

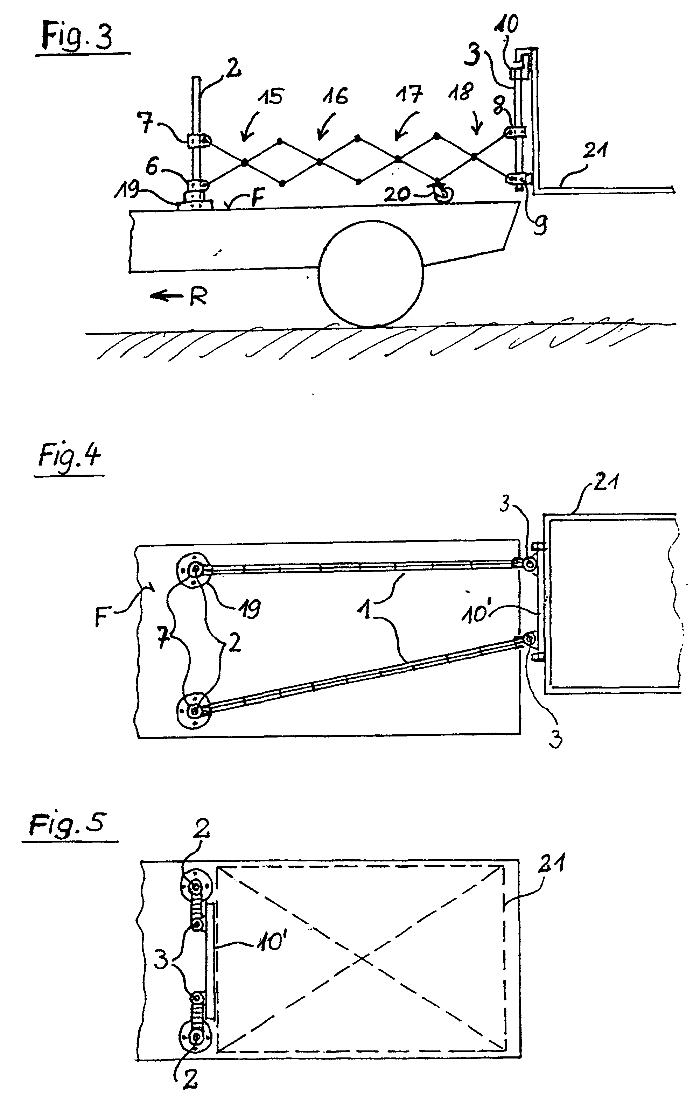

Mit Fig.3 wird eine nahezu vollständig gegen die Fahrtrichtung R ausgezogene Trägereinrichtung 1 gezeigt, die aus vier hintereinander schwenkbeweglich verbundenen Strebenpaaren 15, 16, 17, 18 gebildet ist, wobei die freien Enden des ersten und letzten Strebenpaares 15 bzw. 18, wie schon mit Fig.1 beschrieben, die Führungselemente 6, 7 bzw. 8, 9 aufweisen, mit denen der Strebenverbund an den Führungsstangen 2, 3 gelagert und gesichert ist. Die Führungsstange 2 ist gegen vertikales Ausziehen in ein Fußklemmstück 19 formschlüssig eingespannt, das auf dem Fahrzeugladeboden F aufsteht und - hier nicht gezeigt - mittels Schrauben am Fahrzeugrahmen befestigt ist. Das Führungselement 6 ist mittels eines hier nicht gezeigten Sprengrings gegen vertikales Verschieben gesichert. Im Bereich der letzten hinteren Scherenpaarverbindung ist eine Lenkrolle 20 als Abstützung der Trägereinrichtung 1 gegen den Fahrzeugladeboden F zur Reduzierung des auf die Längsachse der Führungsstange 2 wirkenden Drehmoments angeordnet. Da nicht Gegenstand der Erfindung, ist eine Lastaufnahmeeinrichtung in Form einer Ladeplatte 21 nur angedeutet und nicht näher zu beschreiben.

Fig.4 und Fig.5 zeigen, analog der in Fig.3 vorgestellten Trägereinrichtung, eine Nutzungsvariante, die aus zwei Trägereinrichtungen 1 gebildet wird, an deren ausziehbaren Enden eine traversale Aufnahmeeinrichtung 10' angeordnet ist, die der Aufnahme von hier nicht näher zu beschreibenden Lastaufnahmeeinrichtungen, beispielsweise einer Ladeplatte 21 dient. Wie aus Fig.4 ersichtlich, sind zwei beabstandet auf dem Fahrzeugladeboden F angeordnete Trägereinrichtungen 1 mit einer ihren endseitigen Abstand verkleinernden Traverse 10' verbunden und, in Fahrtrichtung R gesehen, längs dazu und außermittig, über den Fahrzeugladeboden F ragend, mit einer Ladeplatte 21 bestückt. Die Scheren- und Schwenkmechanik ermöglicht es, die Trägereinrichtungen 1 mittig zur Fahrzeugladefläche F auszurichten und die Ladeplatte 21 so weit in das Fahrzeug zu schieben, bis die Trägereinrichtungen 1 auf das Minimum ihrer Längserstreckung zusammengeschoben rechtwinkelig zur Fahrtrichtung R verlaufen.

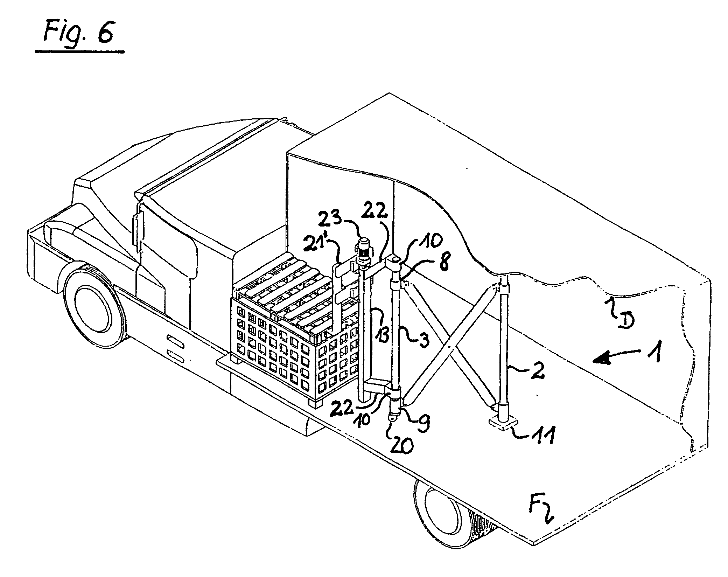

Fig.6 zeigt eine Trägereinrichtung 1, deren Führungsstange 2 in Sockeln 11 zwischen Fahrzeugladeboden F und, hier nicht sichtbar, Fahrzeugdach D angeordnet ist. Die Führungsstange 3 ist mit einer Lenkrolle 20 gegen den Fahrzeugladeboden F abgestützt. Jeweils oberhalb der Führungselemente 8, 9 sind die Aufnahmeeinrichtungen 10 mit daran kraftschlüssig angeordneten Trägarmen 22 erkennbar, die eine mit Elektromotor 23 bestückte Hubeinrichtung 13 hatten, an der eine Lastaufnahmeeinrichtung in Form einer Hubgabel 21' mittels Gewindespindel vertikal verfahrbar ist.

## Patentansprüche

1. System für das Be- und Entladen von Fahrzeugen mit einer am Fahrzeug angeordneten ausziehbaren Trägereinrichtung zur Koppelung und Führung von Ladegut **dadurch gekennzeichnet, dass** die ausziehbare Trägereinrichtung (1) mindestens zwei vertikal aufstehende Führungsstangen (2, 3) aufweist, zwischen denen mindestens zwei scherenartig verbundene, gegeneinander vertikal verschwenkbare Scherenstreben (4, 5) in der Weise angeordnet sind, dass deren Enden mittels daran angelenkter Führungselemente (6, 7, 8, 9) vertikal schiebebeweglich und horizontal schwenkbeweglich an den Führungsstangen (2, 3) geführt werden, dass die Führungsstange (2) an der Karosserie oder an karosseriefesten Teilen fixierbar ist, dass die Führungsstange (3) horizontal um die Führungsstange (2) schwenkbar ist und, dass die Führungsstange (3) wenigstens eine Aufnahmeeinrichtung (10) zum lösbaren Befestigen unterschiedlicher Gegenstände aufweist.

2. System nach Anspruch 1 **dadurch gekennzeichnet, dass** die Führungsstangen (2, 3) einen runden Querschnitt aufweisen und darauf aufsteckbare büchsenförmige Führungselemente (6, 7, 8, 9) nahezu spielfrei und verkantungssicher, gleitend oder rollend geführt werden.

3. System nach Anspruch 1 und 2 **dadurch gekennzeichnet, dass** die Aüfnahmeeinrichtung (10) bzw. die Aufnahmeeinrichtungen an der Führungsstange (3) nahezu spielfrei und verkantungssicher, gleitend oder rollend geführt werden.

4. System nach Anspruch 1 und 2 **dadurch gekennzeichnet, dass** die Führungsstange (2) beidendig zwischen Fahrzeugladeboden (F) und Fahrzeugdach (D) rollbeweglich schienengeführt oder in Sockeln steckbar und verrastbar gelagert ist.

5. System nach Anspruch 1 und 2 **dadurch gekennzeichnet, dass** die Führungsstange (2) mit ihrem unteren Ende im oder auf dem Fahrzeugladeboden (F) steckbar und klemmbar gelagert ist.

6. System nach einem der Ansprüche 1 bis 5 **dadurch gekennzeichnet, dass** die Führungsstange(3) auf dem Fahrzeugladeboden (F) rollbeweglich abstützbar ist.

7. System nach einem der Ansprüche 1 bis 6 **dadurch gekennzeichnet, dass** zwischen den Führungsstangen (2,3) mehrere Scherenstrebenpaare hintereinander und/oder übereinander angeordnet sind.

8. System nach einem der Ansprüche 1 bis 7 **dadurch gekennzeichnet, dass** die Aufnahmeeinrichtung (10) einen seitlich abstehenden Tragarm (22) aufweist, an dem eine horizontal schwenkbare, manuell oder moforisch antreibbare Hubeinrichtung (13) für das aufzunehmende Ladegut angeordnet ist.

9. System nach einem der Ansprüche 1 bis 8 **dadurch gekennzeichnet, dass** die Trägereinrichtung (1) eine manuell oder motorisch betriebene Antriebsvorrichtung für die horizontalen Bewegungen der Führungsstange (3) aufweist.

10. System nach einem der Ansprüche 1 bis 9 **dadurch gekennzeichnet, dass** auf oder an einem Fährzeug mehrere Trägereinrichtungen angeordnet sind.

## Claims

1. A system for loading and unloading of vehicles having a telescopic carrier device arranged at the vehicle for coupling and guiding of loads, **characterized in that** the telescopic carrier device (1) comprises at least two vertical guiding rods (2, 3) between which at least two scissor-like connected, mutually vertically pivotable arm braces (4, 5) are arranged such that the ends thereof are guided by means of hinged guiding members (6, 7, 8, 9) vertically sliding and horizontally pivotable at the guiding rods (2, 3), that the guiding rod (2) can be attached to the car body or parts fixed to the car body, that the guiding rod (3) is horizontally pivotable around the guiding rod (2) and that the guiding rod (3) comprises at least one receiving means (10) for detachably mounting different objects.

2. The system according to claim 1, **characterized in that** the guiding rods (2, 3) have a circular cross-section and attachable bushing-shaped guiding members (6, 7, 8, 9) are guided slidingly or rollingly nearly free from play and secure of tilting.

3. The system according to claims 1 and 2, **characterized in that** the receiving means (10) or the receiving means at the guiding rod (3) are guided slidingly or rollingly nearly free from play and secure of tilting.

4. The system according to claims 1 and 2, **characterized in that** the guiding rod (2) is supported at both ends between the vehicle's loading platform (F) and the roof of the vehicle (D) either rollingly guided on rails or attachably and engagingly in bushings.

5. The system according to claims 1 and 2, **characterized in that** the guiding rod (2) is supported with its lower end attachably and clampingly in or on the vehicle's loading platform (F) .

6. The system according to one of claims 1 to 5, **characterized in that** the guiding rod (3) is rollingly supportable on the vehicle's loading platform (F).

7. The system according to one of claims 1 to 6, **characterized in that** a plurality of pairs of arm braces are arranged one behind the other and/or one on top of the other between the guiding rods (2, 3).

8. The system according to one of claims 1 to 7, **characterized in that** the receiving means (10) comprises a laterally protruding carrier arm (22) at which a horizontally pivotable, manually or power driven lifting device (13) is arranged for the loads to be received.

9. The system according to one of claims 1 to 8, **characterized in that** the carrier device (1) comprises a manually or power driven driving means for the horizontal movements of the guiding rod (3).

10. The system according to one of claims 1 to 9, **characterized in that** a plurality of carrier devices is arranged on or at the vehicle.

## Revendications

1. Système pour le chargement et le déchargement de véhicules avec un système de porteur extractible disposé sur le véhicule pour l'amarrage et le guidage de marchandises, **caractérisé en que** le système de porteur extractible (1) comprend au moins deux barres de guidage (2, 3) verticales, entre lesquelles sont placés au moins deux montants croisés (4, 5) orientables verticalement l'un par rapport à l'autre de sorte que leurs extrémités sont guidées au moyen d'éléments de guidage (6, 7, 8, 9) articulés par mouvement glissant vertical et par mouvement pivotant horizontal sur les barres de guidage (2, 3), en ce que la barre de guidage (2) peut être fixée sur la carrosserie ou sur des parties fixes de la carrosserie, en ce que la barre de guidage (3) est pivotante horizontalement autour de la barre de guidage (2) et en ce que la barre de guidage (3) comprend au moins un dispositif de réception (10) en vue de la fixation amovible de différents objets.

2. Système selon la revendication 1, **caractérisé en ce que** les barres de guidage (2, 3) présentent une section transversale ronde sur lesquelles des éléments de guidage (6, 7, 8, 9) à emboîtement en forme de douilles sont guidés par glissement ou par roulement pratiquement sans jeu et sans risque de coincement.

3. Système selon les revendications 1 et 2, **caractérisé en ce que** le dispositif de réception (10) voire les dispositifs de réception sont dirigés par glissement ou par roulement sur la barre de guidage (3) pratiquement sans jeu et sans risque de coincement.

4. Système selon les revendications 1 et 2, **caractérisé en ce que** la barre de guidage (2) est guidée sur rails par mouvement de roulement des deux côtés entre le plancher de chargement du véhicule (F) et le toit du véhicule (D), ou est montée dans des socles, tout en pouvant être embrochée et enclenchée dans ceux-ci.

5. Système selon les revendications 1 et 2, **caractérisé en ce que** la barre de guidage (2) est montée avec son extrémité inférieure, tout en pouvant être enfichée et bloquée, dans ou sur le plancher de chargement du véhicule (F).

6. Système selon l'une des revendications 1 à 5, **caractérisé en ce que** la barre de guidage (3) peut être appuyée par mouvement de roulement sur le plancher de chargement du véhicule (F).

7. Système selon l'une des revendications 1 à 6, **caractérisé en ce que** plusieurs couples de montants croisés sont disposés les uns derrière les autres ou les uns au-dessus des autres entre les barres de guidage (2, 3).

8. Système selon l'une des revendications 1 à 7, **caractérisé en ce que** le dispositif de réception (10) comprend un bras de support (22) placé latéralement sur lequel est disposé un dispositif de levage (13) pivotant horizontalement et pouvant être commandé manuellement ou par entraînement motorisé, destiné à la marchandise à recevoir.

9. Système selon l'une des revendications 1 à 8, **caractérisé en ce que** le système de porteur (1) comprend un dispositif d'entraînement à commande manuelle ou motorisée pour les mouvements horizontaux de la barre de guidage (3).

10. Système selon l'une des revendications 1 à 9, **caractérisé en ce que** plusieurs systèmes de porteur sont disposés sur ou contre un véhicule.
